# EUROPÄISCHE PATENTSCHRIFT

(11) **EP 1 516 028 B1**
(45) Veröffentlichungstag und Bekanntmachung des Hinweises auf die Patenterteilung: **23.02.2011**
(21) Anmeldenummer: 03757016.5
(22) Anmeldetag: 04.06.2003
(51) Int. Cl.: C09J 5/06, F16F 1/38

(54) **RUNDLAGER MIT LAGERELEMENT AUS ZELLIGEM POLYURETHANELASTOMER UND EINEM SCHMELZKLEBSTOFF ALS HAFTVERMITTLER**
CIRCULAR BEARING WITH AN OUTER BUSHING MADE OF CELLULAR POLYURETHANE ELASTOMER AND A HOT-MELT ADHESIVE USED AS A GLUE
PALIER ROND COMPORTANT UN ELEMENT PALIER EN POLYURETHANE ELASTOMERE ALVEOLE ET COLLE FUSIBLE UTILISEE COMME AGENT ADHESIF

(30) Priorität: 10.06.2002 DE 10225796
(43) Veröffentlichungstag der Anmeldung: 23.03.2005
(73) Patentinhaber: BASF SE, 67056 Ludwigshafen (DE)
(72) Erfinder: WULF, Andreas, 49406 Barnstorf (DE)
(86) Internationale Anmeldenummer: PCT/EP2003/005819
(87) Internationale Veröffentlichungsnummer: WO 2003/104345

(56) Entgegenhaltungen:
- EP-A- 1 281 887
- DE-A- 2 140 124
- DE-A- 2 748 686
- DE-A- 4 017 499
- DATABASE WPI Section Ch, Week 199122 Derwent Publications Ltd., London, GB; Class A25, AN 1991-159196 XP002259764 & JP 03 093526 A (INOACK CORP KK), 18. April 1991 (1991-04-18)

## Beschreibung

Die Erfindung betrifft Rundlager enthaltend (i) bevorzugt zylindrische Außenbuchse, (ii) bevorzugt zylindrisches Lagerelement auf der Basis von zelligen Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53 571 von ≥ 2, bevorzugt 2 bis 8 N/mm², einer Dehnung nach DIN 53 571 von ≥ 300, bevorzugt 300 bis 700 % und einer Weiterreißfestigkeit nach DIN 53 515 von ≥ 8, bevorzugt 8 bis 25 N/mm, das bevorzugt von der Außenbuchse umfasst wird, und (iii) hohle bevorzugt zylindrische Innenbuchse, die bevorzugt in dem Lagerelement (ii) positioniert ist. Außerdem betrifft die Erfindung Automobile oder Lastkraftwagen enthaltend die erfindungsgemäßen Rundlager. Des weiteren bezieht sich die Erfindung auf Verfahren zur Herstellung von Rundlagern enthaltend (i) Außenbuchse, (ii) bevorzugt zylindrisches Lagerelement auf der Basis von zelligen Polyisocyanat-Polyadditionsprodukten und (iii) hohle Innenbuchse. Außerdem betrifft die Erfindung Verbundelemente enthaltend zelliges Polyurethanelastomer, bevorzugt die eingangs dargestellten Polyurethanelastomere, verklebt mittels eines reaktiven Schmelzklebers enthaltend verkapselte Isocyanate mit mindestens einem weiteren Werkstoff, z.B. zellige Polyurethanelastomere, thermoplastische Polyurethane, Metalle, Polyurethanweichschaumstoff, Polyurethanhartschaumstoff, Polyoxymethylen, Polystyrol, ABS, ASA, Polyolefine, Holz, bevorzugt zellige Polyurethanelastomere, thermoplastische Polyurethane, Metalle. Des weiteren betrifft die Erfindung zelliges Polyurethanelastomer, bevorzugt das eingangs dargestellten zelligen Polyurethanelastomer, das auf seiner Oberfläche gesinterten reaktiven Schmelzklebstoff, bevorzugt enthaltend verkapselte Isocyanate, aufweist.

Rundlager werden in Automobilen innerhalb des Fahrwerks Fahrwerks und bei der Lagerung von Aggregaten verwendet und sind allgemein bekannt. Mit Hilfe von Rundlagern werden im Automobil Aggregate, Fahrwerksbauteile u.a. untereinander oder mit der Karosserie verbunden. Dabei erfüllen sie durch die Verwendung von Elastomerwerkstoffen die Funktion einer elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z.B. die Anbindung der Stoßdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes.

Aufgabe der vorliegenden Erfindung war es, Rundlager enthaltend (i) Außenbuchse, (ii) bevorzugt zylindrisches Lagerelement auf der Basis von zelligen Polyisocyanat-Polyadditionsprodukten und (iii) hohle Innenbuchse zu entwickeln, die als Baukastensystem auf der Basis von vorgefertigten Halbzeugen hergestellt werden konnten. Dadurch sollten der Herstellungsprozess vereinfacht und die Sicherstellung der Teilequalität verbessert werden.
Diese Aufgabe konnte dadurch gelöst werden, dass das zwischen der Außenbuchse (i) und der Innenbuchse (iii) befindliche Lagerelementes (ii) mittels eines reaktiven Schmelzklebstoffes mit der Außenbuchse (i) und/oder der Innenbuchse (iii) verklebt ist.

Derzeit werden Rundlager so hergestellt, dass an mit chemischen Haftvermittlern beschichtete Außenhülsen (i) und hohle Innenbuchsen (iii) in speziellen Werkzeugen zellige Polyisocyanat-Polyadditionsprodukte angeschäumt werden. Diese Herstellungsweise hat verschiedene Nachteile. Der Prozess und die Werkzeuge sind aufwendig und mit viel manueller Tätigkeit verbunden. Gleichzeitig lässt sich der Prozess nur schwierig automatisieren. Die Teilequalität kann nicht unmittelbar überprüft werden, weil nach dem Schäumen noch eine Reihe von Prozessschritten durchgeführt werden müssen. Daher ist eine Prozessführung im Sinne eines Regelkreises nicht möglich, weil Prüfergebnisse u.U. erst nach einer Woche vorliegen. Der Aufbau von Rundlagern mit Hilfe der erfindungsgemäßen bevorzugt reaktiven Schmelzklebstoffe führt dazu, dass diese Lager aus Halbzeugen montiert werden können, deren Eigenschaften vor der Montage überprüft werden können. Dadurch ist es möglich, die Teilequalität sehr genau einzustellen und den nachfolgenden Prüfaufwand erheblich zu reduzieren. Gleichzeitig kann das Fenster der Produkteigenschaften verkleinert werden. Der wesentliche Vorteil liegt aber darin begründet, dass sich der Montageprozess erheblich einfacher automatisieren lässt. Ebenfalls lässt sich der Gedanke des Baukastensystems auf der Basis von vorgefertigten Halbzeugen leichter realisieren. Wesentlich für die automatisierte Fertigung solcher Lager ist die Applikation des Klebstoffes. Hier lassen sich reaktive Systeme auf der Basis von Isocyanaten oder Epoxiden verwenden oder Schmelzklebstoffe (Hotmelts) verwenden. Die Verwendung solcher Klebstoffe erfordert aber wieder spezielle Prozessschritte. Z.B. lassen sich mit reaktiven Systemen vorbehandelte Fügeteile nur schwer fügen, weil die Klebstoffe von den Fügeteilen abgeschert werden. Hotmelts erfordern Temperaturfenster bei der Verklebung, die u.U. zu einer thermischen Schädigung des Lagerelementes (ii) führen. Abhilfe kann hier durch die bevorzugte Klasse von Klebstoffen geschaffen werden, die die spezifischen Eigenschaften von Holtmelts und reaktiven Klebstoffen in sich vereinen. Derartige Klebstoffe sind kommerziell erhältlich. Bevorzugt handelt es sich dabei um einen reaktiven Schmelzklebstoff, der bevorzugt verkapselte Isocyanate enthält, die bevorzugt in eine Polyolmatrix eingebettet sind. Diese reaktiven Schmelzklebstoffe zeichnen sich dadurch aus, dass sie z.B. als Pulver auf die zu verklebende Oberfläche appliziert und quasi in Art eines Emailles aufgeschmolzen werden können, wodurch sie auf der zu verklebenden Oberfläche standfest haften ohne dadurch wesentlich an Reaktivität zu verlieren. Damit ist es möglich, derartig vorbehandelte Fügeteile zueinander zu positionieren, ohne den Klebstoff von der Fügeteiloberfläche abzuscheren. Die Vernetzungsreaktion wird erst bei Erwärmung der vorpositionierten Fügeteile deutlich über den Schmelzpunkt des Pulvers durch Aufbrechen der verkapselten Isocyanate eingeleitet. Das Auftragen des Pulvers, z.B. mit üblicher Teilchengröße auf die zu verklebende Oberfläche und das Fixieren des Pulvers durch Aufschmelzen des Pulvers wird auch als "Sintern" bezeichnet. Bevorzugt weist der reaktive Schmelzklebstoff auf der Basis verkapselter Isocyanate einen Schmelzbereich bei Temperaturen von kleiner 95°C, bevorzugt 30°C bis 90°C, besonders bevorzugt 45°C bis 65°C, und einen Reaktionsbereich bei Temperaturen bevorzugt größer 100°C, besonders bevorzugt 110°C bis 125°C auf. Derartige reaktive Schmelzklebstoffe sind bei der Firma Collano Ebnöther AG, Sempach-Station, Schweiz erhältlich und in dem Artikel "Vorapplizierbare PUR-Hotmelts: Aktivierung per Wärmestoß", Adhäsion Kleben und Dichten, Jahrgang 43, 10/99, S. 22-24, beschrieben.

Die mit dem Lagerelement (ii) beziehungsweise allgemein mit den zelligen Polyurethanelastomeren mit den erfindungsgemäßen Klebstoffen zu verklebenden Oberflächen, insbesondere die der Außenbuchse (i) und/oder der Innenbuchse (iii) können bevorzugt beschichtet, besonders bevorzugt mit Polyurethanen beschichtet sein. Dies bietet den Vorteil, dass bei gleichen Oberflächen in der Regel eine bessere Haftung erzielt wird, insbesondere dann, wenn ein Klebstoff gewählt wird, der in der Chemie den Oberflächen gleicht. Bei metallenen Fügeteilen können diese Beschichtung den Korrosionsschutz übernehmen. Als Beschichtung kommen dem Fachmann allgemein bekannte Beschichtungssysteme, auch Coatings genannt, insbesondere auf der Basis von Isocyanaten und Polyolen zur Herstellung einer Polyurethanbeschichtung oder Systeme auf der Basis von Epoxiden in Betracht. Bevorzugt sind somit auch Rundlager, bei denen die Oberfläche der Außenbuchse (i) und/oder der Innenbuchse (iii) , die mit dem Lagerelement verklebt wird, zusätzlich zu der Klebschicht eine Beschichtung auf der Basis von Polyurethanen aufweist. Die Beschichtung kann beispielsweise durch Pulverlacksysteme oder reaktive Systeme auf der Basis von Isocyanaten und Polyolen erfolgen.

Die Innenbuchse (iii), die auch mehrteilig aufgebaut sein kann, kann auf üblichen Materialien basieren, beispielsweise Metallen, z.B. Stahl, Eisen und/oder Aluminium oder harten Kunststoffen, z.B. TPU. Die Innenbuchse (iii) verfügt bevorzugt über eine Innenbohrung üblicherweise zur Aufnahme eines Befestigungsbolzen. Der Außendurchmesser ergibt sich aus konstruktiven Gründen.

Bei Applikationen, bei denen keine haftende Verbindung zwischen der dem Lagerelement zugewandten Oberfläche der Innenhülse gefordert wird, kann diese mit einem, bevorzugt aufgesetzten Kragen, der bevorzugt senkrecht zur Innenbohrung und bevorzugt auf der äußeren Oberfläche der Innenbuchse (iii) umlaufend ist, versehene werden. Dabei kann dieser in Durchmesser, Dicke, Ausführung und Anzahl variieren. Bevorzugt wird die Innenbuchse in axialer Ausrichtung nicht vom Lagerelement (ii) überragt.

Das Lagerelement (ii) kann aus einem oder mehreren Einzelteilen, die elastische Eigenschaften aufweisen, bestehen. Werden mindestens zwei Lagerelemente verwendet, so können diese je nach Anforderung quasi in einem Stecksystem zum vollständigen Lagerelement zusammengefügt werden, wobei allgemein bekannten "Steck"-Verfahren gewählt werden können, z.B. Nut-Feder. Erfindungsgemäß ist auch das Verkleben einzelner zelliger Polyurethanelastomere, insbesondere den bevorzugten zelligen Polyurethanelastomeren, mit Schmelzklebstoffen, bevorzugt den reaktiven Schmelzklebstoffen. Dabei können die zelligen Polyurethanelastomeren mit sich selbst oder anderen Werkstoffen verklebt werden. Durch die Verwendung mehrerer Einzelteile im Lagerelement können Lagerelemente mit unterschiedlichen Eigenschaften verwendet werden, die je nach ihrer Anordnung im Rundlager spezifische Anforderungen übernehmen können. Werden mindestens zwei Lagerelemente (ii) eingesetzt, weisen diese bevorzugt unterschiedliche Dichten und somit unterschiedliche mechanische und dynamische Eigenschaften auf. Während beispielsweise ein Lagerelement (ii) aus einem mikrozelligen PUR mit geringer Dichte bestehen kann um im Einsatzfall durch die Relativbewegung zur Innen- und Außenbuchse viel Dämpfung zu erzeugen, kann ein weiteren Lagerelement (ii) im Rundlager aus einem mikrozelligen Pur mit hoher Dichte gefertigt sein, um dynamische Steifigkeiten zu gewährleisten und um die max. Verformung zu reduzieren. Erfindungsgemäß kann somit auf speziellen Anforderungen eingegangen werden. Das erfindungsgemäße Lagerelement (ii) basiert bevorzugt auf Elastomeren auf der Basis von Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53 572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80°C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird.

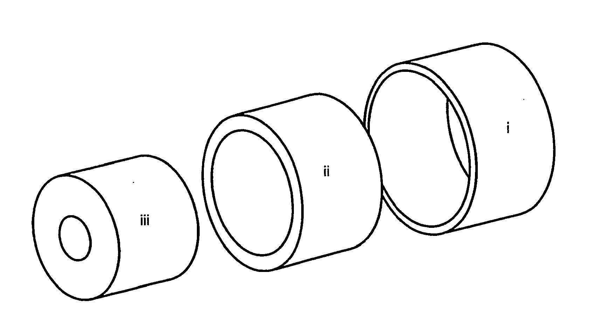

Die Außenbuchse (i) kann ein- oder mehrteilig aufgebaut sein und kann auf üblichen Materialien basieren, beispielsweise Metallen, z.B. Stahl, Eisen und/oder Aluminium oder harten Kunststoffen, z.B. TPU. Die Außenbuchse (i) verfügt über einen Außendurchmesser und einen Innendurchmesser, die in den Abmaßen und Ausführungen variieren können. Die Erfindung umfasst sowohl kalibrierte und unkalibrierte Buchsen. Eine Fixierung der Einzelteile, d.h. Innenbuchse (iii), Lagerelement(e) (ii) und Außenbuchse (i) kann beispielsweise durch eine Kalibrierung erreicht werden. Beispielsweise können bei dem Zusammenbau die Einzelteile in die Außenbuchse zusammengefügt werden, wobei der Außendurchmesser der Innenbuchse geringfügig kleiner als der Innendurchmesser der Außenbuchse ist. Nachdem alle Teile zusammen gefügt sind, kann anschließend die Außenbuchse im Durchmesser kleiner kalibriert werden, wodurch die eingesetzten Teile zueinander fixiert werden. Die Außenbuchse kann auch so ausgeführt sein, dass sie vor einem einteiligen oder mehrteiligen Umformungsprozess zur endgültigen Formgebung mit den Elastomerwerkstoffen und der Innenbuchse komplettiert wird. Die Elastomerteile können einen größeren Außendurchmesser haben als der Innendurchmesser der Außenbuchse. Dadurch wird eine Vorspannung des Elastomerbauteils erzielt. Bei dieser Bauweise kann auf einen anschließenden Kalibrierprozess verzichtet werden. Diese Vorteile gelten auch, wenn der Innendurchmesser des Elastomerbauteile kleiner ist als der Außendurchmesser der Innenbuchse. Außenbuchse (i), Innenbuchse (iii) und Lagerelemente (ii) sind beispielhaft in der Figur 1 dargestellt.

Bevorzugt werden die Lagerelemente (ii) passgenau in der Außenbuchse (i) und die Innenbuchse (iii) passgenau im Lagerelement aufgebaut aus den einzelnen Lagerelementen (ii) positioniert, so dass die Teile derart zueinander fixiert sind, dass das gesamte Lagerelement bestehend aus den einzelnen Lagerelementen (ii) sowohl an (i) als auch an (iii) reibt, wenn dies konstruktiv gewünscht ist.

Das Verfahren zur Herstellung der erfindungsgemäßen Rundlager enthaltend (i) Außenbuchse, (ii) Lagerelement auf der Basis von zelligen Polyisocyanat-Polyadditionsprodukten und (iii) hohle Innenbuchse kann beispielsweise derart erfolgen, dass man pulverisierte reaktive Schmelzklebstoffe auf der Basis von verkapselten Isocyanaten, bevorzugt eingebettet in eine Polyolmatrix, auf die zu verklebende Oberfläche des Lagerelementes und/oder auf die zu verklebende, mit Polyurethanen beschichtete Oberfläche der Außenbuchse (i) und/oder der Innenbuchse (iii) aufträgt, die pulverisierten, bevorzugt mit einer mittleren Partikelgröße von kleiner 500 µm, bevorzugt 100 µm bis 350 µm, reaktiven Schmelzklebstoffe bei einer Temperatur von 30°C bis 90°C, bevorzugt 45°C bis 65°C aufschmilzt, die zu verklebenden Teile zueinander fixiert und anschließend den reaktiven Schmelzklebstoff durch Erhitzen auf eine Temperatur von größer 100°C, bevorzugt 110°C bis 125°C aktiviert und durch Umsetzung des reaktiven Schmelzklebstoff die zu verklebenden Teile verklebt.

Die Erfindung soll anhand der folgenden Beispiele näher erläutert werden.

### Beispiele

Auf die innere Oberfläche einer zylindrischen, hohlen Außenbuchse (i) mit einer Höhe von 30 mm, einem äußeren Durchmesser von 52 mm und einem Durchmesser des Hohlraum von 48 mm aus Aluminium wurde ein reaktiver Hotmelt in Pulverform (Purbond® HCM VN 555-I) der Firma Collano aufgetragen und bei einer Temperatur von 60°C für 30 min aufgeschmolzen (Fig. 1). In die derart beschichtete Außenbuchse wurde ein zylindrisches, hohles Lagerelement (ii) mit einer Höhe von 30 mm, einem äußeren Durchmesser von 48 mm und einem Durchmesser des Hohlraums von 38,5 mm gesteckt. In den Hohlraum des Lagerelementes wurde eine zylindrische, hohle Innenbuchse (iii) mit einer Höhe von 30 mm, einem äußeren Durchmesser von 38,5 mm und einem Durchmesser des Hohlraums von 14 mm geschoben, auf deren äußere Oberfläche entsprechend den Ausführungen zur Außenbuchse ein reaktives Hotmelt appliziert worden war. Das fertig zusammengefügte Rundlager wurde bei einer Temperatur von 110°C über eine Dauer von 180 min getempert. Dabei wurde der Reaktionsprozess eingeleitet und ausgeführt.

## Patentansprüche

1. Rundlager enthaltend (i) Außenbuchse, (ii) Lagerelement auf der Basis von zelligen Polyisocyanat-Polyadditionsprodukten und (iii) Innenbuchse, **dadurch gekennzeichnet, dass** das zwischen der Außenbuchse (i) und der Innenbuchse (iii) befindliche Lagerelement (ii) mittels eines Schmelzklebstoffes mit der Außenbuchse (i) und/oder der Innenbuchse (iii) verklebt ist.

2. Rundlager gemäß Anspruch 1, **dadurch gekennzeichnet, dass** das zwischen der Außenbuchse (i) und der Innenbuchse (iii) befindliche Lagerelement (ii) mittels eines reaktiven Schmelzklebstoffes mit der Außenbuchse (i) und/oder der Innenbuchse (iii) verklebt ist.

3. Rundlager gemäß Anspruch 2, **dadurch gekennzeichnet, dass** der reaktive Schmelzklebstoff auf der Basis verkapselter Isocyanate einen schmelzbereich bei Temperaturen kleiner 95°C und einen Reaktionsbereich bei Temperaturen größer 100°C aufweist.

4. Rundlager gemäß Anspruch 1, **dadurch gekennzeichnet, dass** die Oberfläche der Außenbuchse (i) und/oder der Innenbuchse (iii), die mit dem Lagerelement verklebt wird, zusätzlich zu der Klebschicht eine Beschichtung auf der Basis von Polyurethanen aufweist.

5. Automobile oder Lastkraftwagen enthaltend Rundlager gemäß einem der Ansprüche 1 bis 4.

6. Verfahren zur Herstellung von Rundlagern enthaltend (i) Außenbuchse, (ii) Lagerelement auf der Basis von zelligen Polyisocyanat-Polyadditionsprodukten und (iii) hohle Innenbuchse, **dadurch gekennzeichnet, dass** man das Lagerelement mit einem Schmelzklebstoff mit Außenbuchse (i) und/oder der Innenbuchse (iii) verklebt.

7. Verfahren gemäß Anspruch 6, **dadurch gekennzeichnet, dass** man pulverisierte reaktive Schmelzklebstoffe auf der Basis von verkapselten Isocyanaten auf die zu verklebende Oberfläche des Lagerelementes und/oder auf die zu verklebende, mit Polyurethanen beschichtete Oberfläche der Außenbuchse (i) und/oder der Innenbuchse (iii) aufträgt, die pulverisierten reaktiven Schmelzklebstoffe bei einer Temperatur von 30°C bis 90°C aufschmilzt, die zu verklebenden Teile zueinander fixiert und anschließend den reaktiven Schmelzklebstoff durch Erhitzen auf eine Temperatur von größer 100°C aktiviert und durch Umsetzung des reaktiven Schmelzklebstoff die zu verklebenden Teile verklebt.

## Claims

1. A round bearing comprising (i) an outer bush, (ii) a bearing element based on cellular polyisocyanate polyadducts and (iii) an inner bush, wherein the bearing element (ii) present between the outer bush (i) and the inner bush (iii) is adhesively bonded to the outer bush (i) and/or to the inner bush (iii) by means of a hotmelt adhesive.

2. The round bearing according to claim 1, wherein the bearing element (ii) present between the outer bush (i) and the inner bush (iii) is adhesively bonded to the outer bush (i) and/or to the inner bush (iii) by means of a reactive hotmelt adhesive.

3. The round bearing according to claim 2, wherein the reactive hotmelt adhesive based on encapsulated isocyanates has a melting range at temperatures less than 95°C and a reaction range at temperatures greater than 100°C.

4. The round bearing according to claim 1, wherein the surface of the outer bush (i) and/or of the inner bush (iii) which is adhesively bonded to the bearing element has a coating based on polyurethanes in addition to the adhesive coat.

5. An automobile or truck comprising a round bearing according to any of claims 1 to 4.

6. A process for the production of round bearings comprising (i) an outer bush, (ii) a bearing element based on cellular polyisocyanate polyadducts and (iii) a hollow inner bush, wherein the bearing element is adhesively bonded to the outer bush (i) and/or to the inner bush (iii) by means of a hotmelt adhesive.

7. The process according to claim 6, wherein pulverized reactive hotmelt adhesives based on encapsulated isocyanates are applied to that surface of the bearing element which is to be adhesively bonded and/or to that surface of the outer bush (i) and/or of the inner bush (iii) which is to be adhesively bonded and is coated with polyurethanes, the pulverized reactive hotmelt adhesives are melted at from 30 to 90°C, the parts to be adhesively bonded are fixed to one another and the reactive hotmelt adhesive is then activated by heating to more than 100°C and the parts to be adhesively bonded are adhesively bonded by reaction of the reactive hotmelt adhesive.

## Revendications

1. Palier rond contenant (i) un connecteur externe, (ii) un élément de palier à base de produits de polyaddition de polyisocyanate alvéolaires et (iii) un connecteur interne, **caractérisé en ce que** l'élément de palier (ii) qui se trouve entre le connecteur externe (i) et le connecteur interne (iii) est collé avec le connecteur externe (i) et/ou le connecteur interne (iii) au moyen d'un adhésif thermofusible.

2. Palier rond selon la revendication 1, **caractérisé en ce que** l'élément de palier (ii) qui se trouve entre le connecteur externe (i) et le connecteur interne (iii) est collé avec le connecteur externe (i) et/ou le connecteur interne (iii) au moyen d'un adhésif thermofusible réactif.

3. Palier rond selon la revendication 2, **caractérisé en ce que** l'adhésif thermofusible réactif à base d'isocyanates encapsulés présente une plage de fusion à des températures inférieures à 95 °C et une plage de réaction à des températures supérieures à 100 °C.

4. Palier rond selon la revendication 1, **caractérisé en ce que** la surface du connecteur externe (i) et/ou du connecteur interne (iii), qui est collée avec l'élément de palier, comporte un revêtement à base de polyuréthanes en plus de la couche adhésive.

5. Automobiles ou camions contenant un palier rond selon l'une quelconque des revendications 1 à 4.

6. Procédé de fabrication de paliers ronds contenant (i) un connecteur externe, (ii) un élément de palier à base de produits de polyaddition de polyisocyanate alvéolaires et (iii) un connecteur interne, **caractérisé en ce que** l'élément de palier est collé avec le connecteur externe (i) et/ou le connecteur interne (iii) avec un adhésif thermofusible.

7. Procédé selon la revendication 6, **caractérisé en ce que** des adhésifs thermofusibles réactifs pulvérisés à base d'isocyanates encapsulés sont appliqués sur la surface à coller de l'élément de palier et/ou sur la surface à coller, revêtue avec des polyuréthanes, du connecteur externe (i) et/ou du connecteur interne (iii), les adhésifs thermofusibles réactifs pulvérisés sont fondus à une température de 30 °C à 90 °C, les pièces à coller sont fixées les unes aux autres, puis l'adhésif thermofusible réactif est activé par chauffage à une température supérieure à 100 °C et les pièces à coller sont collées par réaction de l'adhésif thermofusible réactif.
